# EUROPEAN PATENT SPECIFICATION

(11) **EP 4 416 426 B1**
(45) Date of publication and mention of the grant of the patent: **08.10.2025**
(21) Application number: 22801772.9
(22) Date of filing: 12.10.2022
(51) Int. Cl.: F23C 3/00, F23C 5/08, F23C 9/00, F23L 7/00, F23L 9/06

(54) **BURNER FOR A SMELTING FURNACE, COMBUSTION SYSTEM, AND COMBUSTION METHOD**
BRENNER FÜR EINEN SCHMELZOFEN, VERBRENNUNGSSYSTEM UND VERBRENNUNGSVERFAHREN
BRÛLEUR POUR UN FOUR À FUSION, SYSTÈME DE COMBUSTION, ET PROCÉDÉ DE COMBUSTION

(30) Priority: 12.10.2021 CN 202111186178
(43) Date of publication of application: 21.08.2024
(73) Proprietor: Combustion Consulting Italy S.r.l., 37066 Sommacampagna (IT)
(72) Inventor: BOULANOV, Oleg, 60180 Nogent-sur-Oise (FR)
(74) Representative: AWA Benelux
(86) International application number: PCT/EP2022/078446
(87) International publication number: WO 2023/062102

(56) References cited:
- EP-A1- 1 634 856
- WO-A1-2014/193390
- WO-A1-2021/086539
- US-A- 5 611 682
- US-A1- 2013 086 949

## Description

### Technical field

The present invention relates to the technical field of combustion devices, and in particular to a burner, a combustion system and a combustion method.

### Background art

In a conventional furnace, a burner is located above a melt in the furnace, and transfers heat to the melt and furnace charge in a radiation heat transfer manner, which has low heat transfer efficiency.
WO 2021/086539 A1 (PRAXAIR TECHNOLOGY INC [US] ) discloses a method comprising: from a forehearth system in which molten glass from a glassmelting furnace flows through one or more channels having refractory side walls, wherein the molten glass in the channels is maintained in the molten state by heat of combustion provided directly to the top surface of the molten glass by combustion in a combustion zone above the molten glass in the forehearth system that has at least 2 air-fuel burners at which air and fuel fed to the air-fuel burners are combusted to provide the heat of combustion, removing at least 50% of said air-fuel burners and replacing them with one or more air-fuel injectors each of which opens at its own refractory port in a side wall of the channel and each of which is capable of injecting a premixed mixture of air and fuel into the space in the channel over the molten glass, and with one or more oxygen injectors each of which opens at its own refractory port in a side wall of the channel and each of which is capable of injecting gaseous oxidant into the space in the channel over the molten glass, wherein the sum of the number of said air-fuel injectors plus the number of said oxygen injectors, which replace said air-fuel burners, is less than the number of air-fuel burners that are removed, and then injecting from each air-fuel injector into the space above the molten glass in the channel a premixed mixture of air and fuel at a velocity greater than 50 ft/sec in which the amount of air in the mixture injected from the injector is between 25% to 60% of the stoichiometric air required for complete combustion of the fuel in the mixture injected from the same injector, and injecting from each oxygen injector into the space above the molten glass in the channel gaseous oxidant containing at least 80 vol.% oxygen at a velocity less than 50 ft/sec (15,24 m/s) and at a rate that provides sufficient oxygen taken together with the oxygen content of the mixture of air and fuel that is injected from the air-fuel injectors, to completely combust the fuel that is injected from the fuel injectors, wherein there is no physical barrier between the molten glass and the space into which the mixture of air and fuel, and the gaseous oxidant, are injected, and in the space above the molten glass combusting the fuel injected from the air-fuel injectors with the oxygen in the air and with the oxygen injected from the oxygen injectors so as to generate excess oxygen in the flue gas. Thus efficiency of the combustion that is carried out in the forehearth of a glass manufacturing facility is improved by replacing air-fuel burners with a smaller number of air-fuel injectors and oxygen injectors.
In order to improve the thermal efficiency of the furnace, it is known to position the burner below a top surface of a melt, and is referred to as a submerged combustion burner. An existing submerged combustion burner generally uses a diffusion flame or a premixed flame. The submerged combustion burner using a diffusion flame generally comprises two concentric pipes and a nozzle, wherein the two concentric pipes include a central pipe and an outer pipe, the central pipe delivers a combustible gas to the nozzle, an annular space between the central pipe and the outer pipe is used to deliver oxygen to the nozzle, and the combustible gas leaving the nozzle is mixed with oxygen in the melt and then burned. The submerged combustion burner using a premixed flame generally comprises a hollow pipe, two gas supply pipes and a nozzle, wherein one of the two gas supply pipes supplies a combustible gas into the hollow pipe, the other gas supply pipe supplies an oxidant into the hollow pipe, and the combustible gas and the oxidant that are supplied into the hollow pipe are mixed in the hollow pipe and then enter a melt via the nozzle for burning.

In the submerged combustion burner using a diffusion flame, the oxidant and the combustible gas separately enter a combustion zone, and the generated flame is more stable and safer, but the flame is too long to meet heating requirements of a furnace with a relatively small transverse dimension. In the submerged combustion burner using a premixed flame, the oxidant and the combustible gas enter a combustion zone after being mixed in a mixing apparatus, and the generated flame has a smaller length and is more efficient, but the premixed mixture is prone to backfire and explosion, so that it is required to use a precise flame check valve system and a flame grille protection system, which leads to low safety.
US 2013/086949 A ( CHARBONNEAU MARK WILLIAM [US]) discloses an apparatus including a first and second conduits configured to form an annulus between them. An adjustable structure includes a body having an upper surface, a lower surface, and a circumferential surface abutting a portion of the internal surface of the second conduit. The structure is adjustable axially in relation to and removably attached to the first conduit via a hub. The hub defines a central passage for fuel or oxidant. The body has one or more non-central through passages configured such that flow of an oxidant or fuel therethrough causes the fuel or oxidant to intersect flow of fuel or oxidant exiting from the central passage in a region above the upper surface of the body.
WO 2014/193390 A1 (JOHNS MANVILLE [US]) discloses a submerged combustion burner for a glass melting furnace comprising: an inner conduit (34) having inlet (14) and exit (12) ends; and an outer conduit (32) having inlet (33B) and outlet (33A) ends substantially juxtaposed to the inlet (14) and exit (12) ends of the inner conduit (34), with the proviso that the outer conduit (32) outlet end (33A) extends beyond the exit end (12) of the inner conduit (34) by a length sufficient to create a fuel and oxidant mixing region (20) downstream of the inner conduit (34) exit end (12), the outer conduit (32) being substantially concentric with the inner conduit (34). Improved fuel and oxidant mixing with concentric fuel and oxidant conduits (32, 34) is achieved by one of means of non-tubular conduit exits, means of mixing holes from outer (32) to inner conduit (32), and partial obstructing means. Additionally, an external conduit (30) and outer conduit (32) form two passages for passing a cooling fluid (CFI, CFO) there between.

### Summary

Regardless of the submerged combustion burner using a diffusion flame or the submerged combustion burner using a premixed flame it is difficult to ensure stable operation of the burners under the melt, due to the following problems which can occur. Firstly, bubbles of flame escaping from the burner will create a constantly pulsating field counter pressure in the melt above the burner. The burner flame must be very stable and not extinguish under such strong perturbing conditions. Secondly, the molten liquid will constantly try to penetrate and plug the injector openings. Thirdly, the melt tends to solidify around the injectors and after some times will completely plug them.

One objective of the present invention is to provide a burner for a smelting furnace, a combustion system and a combustion method, to solve the technical problem existing in the prior art that a burner cannot generate short flames with high safety and good stability in the presence of a melt.

To achieve the foregoing objective, a burner for a smelting furnace is provided as set out in the appended claims. The burner for a smelting furnace comprises:
a housing comprising a bottom wall and a plurality of side walls, which enclose a combustion chamber having an opening at the top; and
injection members arranged on two side walls opposite to each other among the plurality of side walls and including several first injectors and several second injectors, the first injectors being used to supply, to the combustion chamber, a combustible gas and first-part oxidant mixture comprising a combustible gas and a first-part oxidant, with the volume percentage of the combustible gas in the combustible gas and first-part oxidant mixture being greater than an upper combustion limit of the combustible gas, the second injectors being used to supply a second-part oxidant to the combustion chamber, and the total amount of the first-part oxidant and the second-part oxidant that are supplied to the combustion chamber reaching stoichiometric balance with the amount of the combustible gas supplied to the combustion chamber.

Advantageously, an included angle between each of the injection members and the bottom wall is between -40° and 40°.

Advantageously, the injection members are detachably arranged on the corresponding side walls.

Advantageously, a fluid injected by each of the injection members forms a recirculation zone in the combustion chamber, with the cross-section of the combustion chamber being polygonal for maintaining the recirculation zone.

Advantageously, the bottom wall has a substantially rectangular shape with a longer axis parallel to the two side walls, preferably wherein the cross-section of the combustion chamber is rectangular, trapezoidal or hexagonal.

Advantageously, the burner further comprises a mixer comprising a mixing pipe and a first gas supply pipe, wherein an inlet of the mixing pipe is used to receive a first oxidant flow; the mixing pipe is internally provided with a longitudinal partition that divides an inner cavity of the mixing pipe into a first flow channel and a second flow channel, with an inlet of the first flow channel and an inlet of the second flow channel being both maintained in communication with the inlet of the mixing pipe, an outlet of the first flow channel being in communication with the first injectors, and an outlet of the second flow channel being in communication with the second injectors; and the first gas supply pipe is in communication with the first flow channel and is used to convey a combustible gas flow to the first flow channel.

Advantageously, the mixer further comprises a second gas supply pipe; and the second gas supply pipe is in communication with the second flow channel and is used to convey a second oxidant flow to the second flow channel.

Advantageously, the mixer further comprises a spoiler assembly provided in the first flow channel and/or the second flow,

Advantageously, the burner further comprises a first distribution chamber and a second distribution chamber, wherein the first flow channel is in communication with the first injectors via the first distribution chamber, and the second flow channel is in communication with the second injectors via the second distribution chamber.

Advantageously, the burner further comprises a heater used to heat the first-part oxidant and/or the second-part oxidant.

Advantageously, the burner wherein the housing is made of metal and wherein the burner further comprises a cooler arranged on an outer side of the housing and used to cool the housing and the part of each of the injection members located outside the housing.

Advantageously, an inner side of the housing is provided with a thermal insulation coating.

To achieve the foregoing objectives, the present invention further provides a combustion system, comprising a distribution pipe system and several burners described above, wherein the distribution pipe system comprises several first distribution pipes respectively used to supply the combustible gas and first-part oxidant mixture to the several burners. Alternatively, the distribution pipe system comprises a second distribution pipe and several third distribution pipes, the second distribution pipe being a reducing pipe, the several third distribution pipes being sequentially in communication with the second distribution pipe in a gas flow direction of the second distribution pipe, and the several third distribution pipes being respectively used to supply the combustible gas and first-part oxidant mixture to the several burners.

To achieve the foregoing objectives, the present invention further provides a combustion method applied to the burner described above, the combustion method comprising:
mixing a combustible gas with a first-part oxidant with each other before entering a combustion chamber while preventing spontaneous ignition so as to obtain a combustible gas and first-part oxidant mixture, with the volume percentage of the combustible gas in the combustible gas and first-part oxidant mixture being greater than an upper combustion limit of the combustible gas;
supplying the combustible gas and first-part oxidant mixture to the combustion chamber by means of several first injectors; and
supplying a second-part oxidant to the combustion chamber by means of several second injectors, wherein the total amount of the first-part oxidant and the second-part oxidant that are supplied to the combustion chamber reaches stoichiometric balance with the amount of the combustible gas supplied to the combustion chamber.

The burner provided in the present invention has the following beneficial effects. Compared with the prior art, the burner provided in the present disclosure supplies the combustible gas and first-part oxidant mixture comprising the first-part oxidant and the combustible gas to the combustion chamber by means of the several first injectors, and supplies the second-part oxidant to the combustion chamber by means of the several second injectors, which also ensures that the amount of the combustible gas supplied to the combustion chamber reaches stoichiometric balance with the total amount of the first-part oxidant and the second-part oxidant supplied to the combustion chamber, so that a partial premixed flame with a small length and high efficiency can be produced, and enters the melt through the opening of the combustion chamber and heats the melt. In addition, the volume percentage of the combustible gas in the combustible gas and first-part oxidant mixture is set to be greater than the upper combustion limit of the combustible gas, which can prevent the spontaneous ignition of the combustible gas and first-part oxidant mixture, thereby greatly improving the combustion safety. In addition, the injection members are arranged on two opposite side walls, so that the gas flows ejected from the first injectors and the second injectors form several recirculation zones, i.e., vortices, in the combustion chamber. By taking advantage of the characteristic that the gas velocity at the center of vortex is almost zero, several zones with stable flame combustion are formed in the combustion chamber, and these zones with stable flame combustion are used to continuously ignite a new mixture part formed by the fresh combustible gas and first-part oxidant mixture and the second-part oxidant that are supplied to the combustion chamber, which greatly improves combustion stability. In addition, vortex flows in the recirculation zones can further automatically adjust the volume of the combustion chamber, and some of furnace charge particles that enter the combustion chamber through the opening of the combustion chamber are re-thrown out of the combustion chamber. When power of the burner is higher, a vortex flow force is larger, and more furnace charge is thrown out of the combustion chamber, and vice versa, so that the volume of the combustion chamber fits with the power of the burner, which further ensures that the burner is stable and implements efficient combustion below a horizontal plane of the melt.

### Brief description of the drawings

In order to more clearly illustrate the technical solutions in the embodiments of the present invention, the accompanying drawings required in the description of the embodiments or the prior art will be briefly described below. Apparently, the accompanying drawings in the following description show only some embodiments of the present invention, and a person of ordinary skill in the art can further obtain other accompanying drawings according to the accompanying drawings without any creative effort.
FIG. 1 is a schematic perspective structural diagram of a burner according to an embodiment of the present invention.
FIG. 2 is a schematic structural diagram of a vertical cross section of a burner for a smelting furnace according to an embodiment of the present invention during operation of the burner.
FIG. 3 is a schematic structural front view of a burner for a smelting furnace according to an embodiment of the present invention when injection members are arranged in a first mode.
FIG. 4 is a schematic structural top view of the burner for a smelting furnace shown in FIG. 3.
FIG. 5 is a schematic structural front view of a burner for a smelting furnace according to an embodiment of the present invention when injection members are arranged in another mode.
FIG. 6 is a schematic structural top view of the burner for a smelting furnace shown in FIG. 5.
FIG. 7 is a first schematic structural diagram of vertical cross section of a combustion chamber of a burner for a smelting furnace provided in an embodiment of the present invention when the combustion chamber has a rectangular cross-section.
FIG. 8 is a second schematic structural diagram of a vertical cross section of a combustion chamber of a burner for a smelting furnace according to an embodiment of the present invention when the combustion chamber has a rectangular cross-section.
FIG. 9 is a schematic structural diagram of a vertical cross section of a combustion chamber of a burner for a smelting furnace according to an embodiment of the present invention when the combustion chamber has a trapezoidal cross-section.
FIG. 10 is a schematic structural diagram of a vertical cross section of a combustion chamber of a burner for a smelting furnace according to an embodiment of the present invention when the combustion chamber has a hexagonal cross-section.
FIG. 11 is a schematic structural diagram of a transverse cross section of a mixer for the burner for a smelting furnace according to an embodiment of the present invention.
FIG. 12 is a schematic structural diagram of a longitudinal cross section of a unilateral flow channel of the mixer shown in FIG. 11.
FIG. 13 is a schematic structural diagram of a burner for a smelting furnace according to an embodiment of the present invention provided with a cooler.
FIG. 14 is a schematic structural diagram of a combustion system according to an embodiment of the present invention.
FIG. 15 is a schematic structural diagram of a combustion system according to another embodiment of the present invention.
FIG. 16 represents a schematic structural diagram of a furnace comprising the burner according to the present invention.

Reference numerals in the drawings: 100 - burner for a smelting furnace ; 110 - housing; 111 - bottom wall; 112 - side wall; 113 - combustion chamber; 1131 - opening; 114 - first wall; 115 - second wall; 120 - injection member; 1201 - longitudinal axis of injection member; 121 - first injector; 122 - second injector; 123 - recirculation zone; 124 - center of recirculation zone; 125 - melt particle; 130 - mixer; 131 - mixing pipe; 1311 - longitudinal partition; 1312 - first flow channel; 1313 - second flow channel; 132 - first gas supply pipe; 133 - second gas supply pipe; 134 - spoiler assembly; 1341 - vertical plate; 1342 - angle plate; 135 - inlet; 136 - outlet; 140 - first distribution chamber; 150 - second distribution chamber; 160 - cooler; 200 - combustion system; 210 - distribution pipe system; 211 - first distribution pipe; 212 - second distribution pipe; 213 - third distribution pipe; 214 - inlet; 215 - end; 300 - furnace; 301 - melting tank; 302 - chimney; 303 - bottom wall of melting tank; 325 - raw material.

### Detailed description

The embodiments of the present invention will be described in detail below. Examples of the embodiments are shown in the accompanying drawings, and throughout the accompanying drawings, the same or similar reference numerals refer to the same or similar elements or elements having the same or similar functions. The embodiments described below with reference to the accompanying drawings are exemplary and are intended to explain the present invention, but should not be construed as limiting the present invention.

In the description of the present invention, it should be understood that orientation or position relationships indicated by terms such as "length", "width", "up", "down", "front", "rear", "left", "right", "vertical", "horizontal", "top", "bottom", "inside", and "outside" are based on orientation or position relationships shown in the accompanying drawings and are merely for ease of description of the present invention and simplification of the description, rather than indicating or implying that the burners or elements referred to must have a specific orientation or be constructed and operated in a specific orientation, and therefore cannot be construed as limiting the present invention.

In addition, terms "first" and "second" are merely for the purpose of description, and should not be construed as indicating or implying relative importance or implicitly indicating the number of technical features indicated. Thus, the features defined with "first" and "second" may explicitly or implicitly include one or more of the features. In the description of the present invention, the meaning of "a plurality of" is two or more, unless specifically defined otherwise.

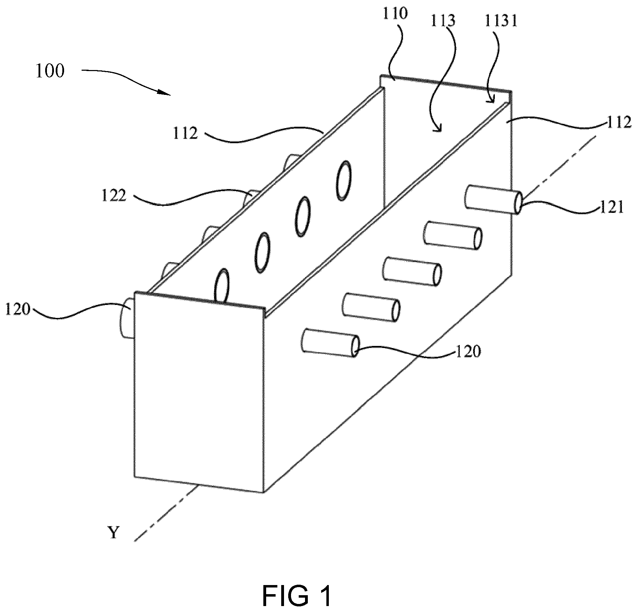

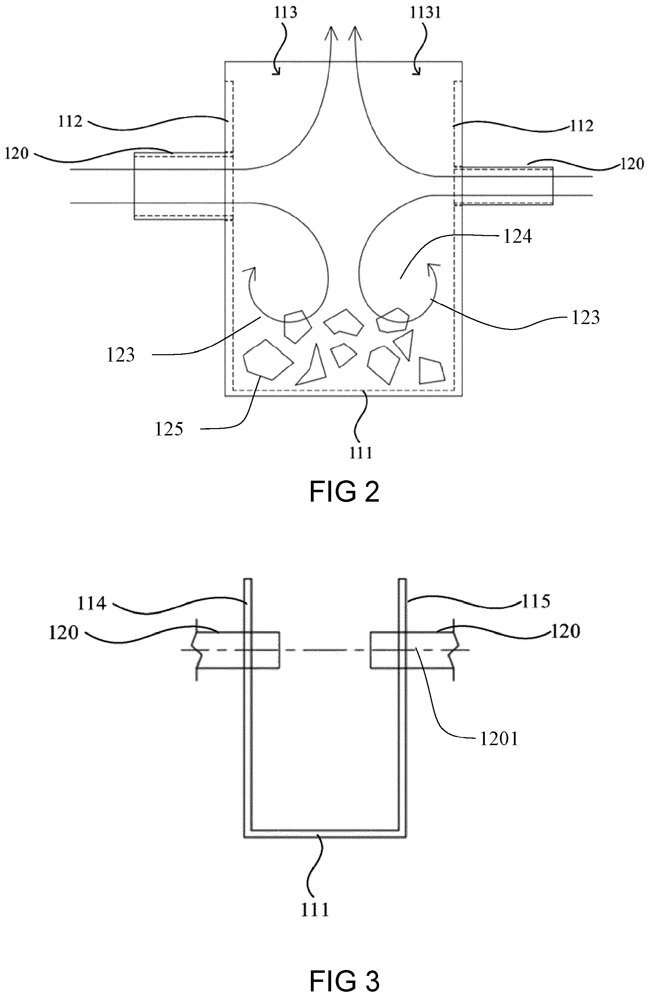

Referring to FIGS. 1 and 2, a burner for a smelting furnace 100 provided in an embodiment of the present invention is described. The burner for a smelting furnace 100 may be arranged below a top surface of a melt and burned in the melt, and is especially suitable for a fluidized bed and a smelting furnace.

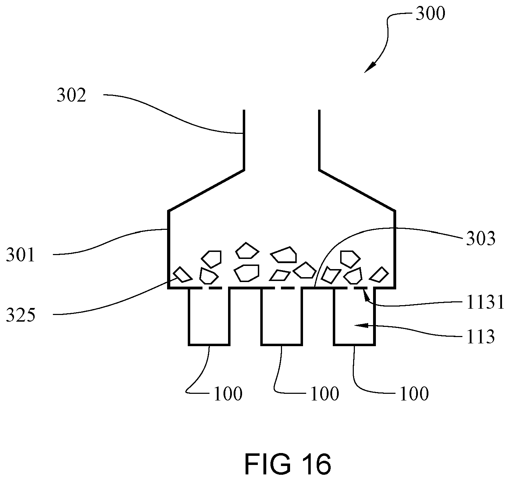

Particularly, referring to FIG. 16, a furnace 300 comprises a melting tank 301 and a chimney 302 in fluid communication with the melting tank 301. The melting tank can be loaded with raw material 325, in particular granular rock material such as bricks, stones, powder and/or dust, accumulating on the bottom wall 303 of the melting tank 301. A plurality of burners, each corresponding to the burner for a smelting furnace 100 as disclosed herein, are positioned underneath the bottom wall 303 of the melting tank 301, with a top end 1131 of the burner 100 being in fluid communication with the melting tank 301 through openings in the bottom wall 303. The burner 100 is shown in FIG. 16 in a submerged type burner configuration.

Referring again to FIGS. 1 and 2, the burner 100 comprises a housing 110 and injection members 120, wherein the housing 110 comprises a bottom wall 111 and a plurality of side walls 112, the bottom wall 111 and the plurality of side walls 112 enclosing a combustion chamber 113 having an opening 1131 at the top. The injection (or ejection) members 120 are arranged on two side walls 112 opposite to each other among the plurality of side walls 112. The injection members 120 include one or multiple first injectors 121 (or ejectors) and one or multiple second injectors 122 (or ejectors), the first injectors 121 being used to supply, to the combustion chamber 113, a combustible gas and first-part oxidant mixture comprising a first-part oxidant and a combustible gas (i.e. a fuel), with a volume percentage of the combustible gas in the combustible gas and first-part oxidant mixture being greater than an upper combustion limit of the combustible gas, the second injectors 122 being used to supply a second-part oxidant to the combustion chamber 113, and the total amount of the second-part oxidant and the first-part oxidant that are supplied to the combustion chamber 113 reaching stoichiometric balance with the total amount of the combustible gas supplied to the combustion chamber 113.

It should be noted that the plurality of side walls 112 of the housing 110 are connected in sequence, each of the side walls 112 has its bottom connected to the bottom wall 111, and enclose the combustion chamber 113 with the bottom wall 111. The top edges of the side walls 112 form a rim of the opening 1131. There may be four, six or a different number of side walls 112, which may be set as required, and is not limiting herein as being unique.

There may be one, two, three or a different number of first injectors 121. The first injectors 121 may be all arranged on a same side wall 112, or may be arranged on two side walls 112 opposite to each other. There may be also one, two, three or a different number of second injectors 122. The second injectors 122 may be all arranged on a same side wall 112, or may be arranged on two side walls 112 opposite to each other. Advantageously, the bottom wall 111 has a substantially rectangular shape with a longer axis Y substantially parallel to the side walls on which injection members 120 are arranged.

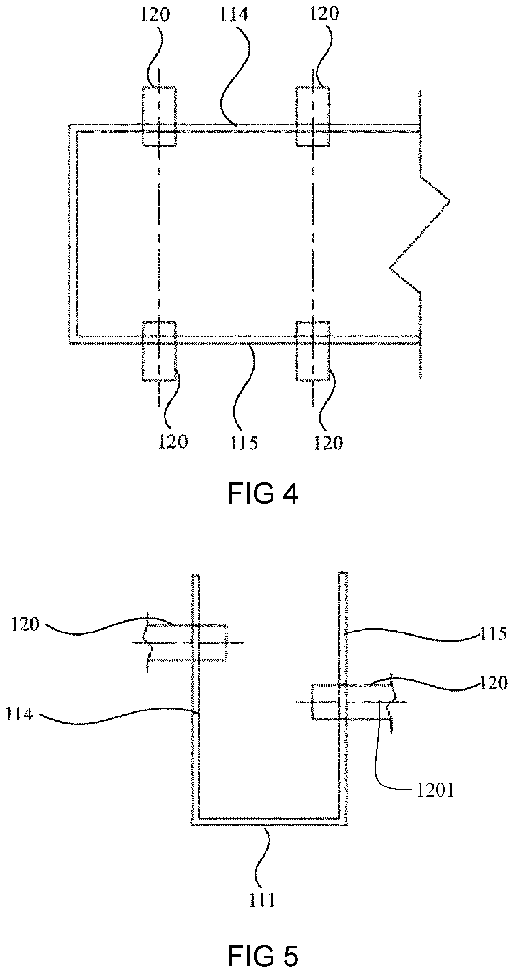

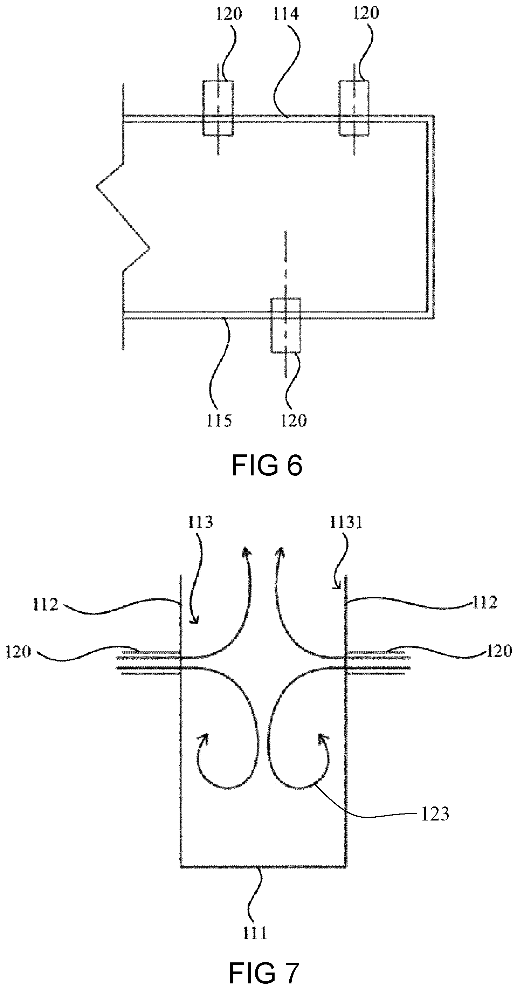

Referring to FIGS. 3 to 6, the two side walls 112 used to arrange the injection members 120 are defined as a first wall 114 and a second wall 115, and the first wall 114 and the second wall 115 are arranged opposite to each other. When all injection members 120 on the housing 110 include at least one first injector 121 and one second injector 122, each injection member 120 shown in FIGS. 3 to 6 may be arranged as the first injector 121 or the second injector 122. The injection members 120 may be arranged on the first wall 114 and the second wall 115 in multiple arrangements. For example, referring to FIGS. 3 and 4, the projection of the injection member 120 located on the first wall 114 and the projection of the injection member 120 located on the second wall 115, can be located at a same height from the bottom wall 111 of the combustion chamber 113, and symmetrically with respect to a longitudinal axis Y (shown by dashed lines in FIG. 1) in the combustion chamber 113. Alternatively, referring to FIGS. 5 and 6, the projection of the injection member 120 located on the first wall 114 and the projection of the injection member 120 located on the second wall 115, can be located at different height from the bottom wall 111 of the combustion chamber 113, and staggered along the longitudinal axis Y of the combustion chamber 113. For another example, referring to FIGS. 3 and 4, several injection members 120 may be arranged at the same height of the housing 110, or referring to FIGS. 5 and 6, several injection members 120 are arranged at different heights of the housing 110. Through the selection of the arrangement described above, recirculation zones may be generated at different positions in transverse and longitudinal directions of the combustion chamber 113, which is conducive to uniform mixing of gases and the improvement of flame stability.

The combustible gas in the combustible gas and first-part oxidant mixture supplied by the first injectors 121 may be methane, natural gas, etc.. The first-part oxidant may be air, oxygen-enriched air or oxygen, etc.. The second-part oxidant supplied by the second injector 122 may be air, oxygen-enriched air or oxygen, etc., which may be set as required, but is not limited herein. The first-part oxidant and the second-part oxidant can have same composition. Alternatively, they can have different composition.

The upper combustion limit of the combustible gas refers to an upper concentration limit at which a uniform mixture system formed by the combustible gas in a combustion-supporting gas is ignited and can maintain a flame under a certain temperature and pressure. When the concentration is greater than the upper concentration limit, the combustible gas cannot spontaneously ignite. The volume percentage of the combustible gas in the combustible gas and first-part oxidant mixture being greater than the upper combustion limit of the combustible gas may be understood as that the percentage of the volume of the combustible gas in the total volume of the combustible gas and the first-part oxidant in the combustible gas and first-part oxidant mixture is greater than the upper combustion limit of the combustible gas, which can prevent the combustible gas and first-part oxidant mixture from spontaneously igniting before entering the combustion chamber 113.

A total amount of the second-part oxidant and the first-part oxidant that are supplied to the combustion chamber 113 reaching stoichiometric balance with a total amount of the combustible gas supplied to the combustion chamber 113 may be understood as that the total amount of the first-part oxidant and the second-part oxidant that are supplied to the combustion chamber 113 is roughly equal to the amount of the oxidant required for complete combustion of the combustible gas supplied to the combustion chamber 113. Optionally, the total amount of the first-part oxidant and the second-part oxidant that are supplied to the combustion chamber 113 may be in the range of 95% of the amount of the oxidant required for complete combustion of the combustible gas supplied to the combustion chamber 113 to 105% of the amount of the oxidant required for complete combustion of the combustible gas supplied to the combustion chamber 113. The combustible gas and first-part oxidant mixture and the second-part oxidant that are supplied to the combustion chamber 113 form a new mixture after further mixing in the combustion chamber 113, and the new mixture may be ignited by an ignition apparatus arranged in the combustion chamber 113 or by causing an initial temperature of the combustion chamber 113 to reach a spontaneous ignition temperature of the new mixture.

Compared with the prior art, the burner 100 provided in this embodiment has the following beneficial effects. Firstly, the burner 100 provided in this embodiment supplies the combustible gas and first-part oxidant mixture to the combustion chamber 113 by means of several first injectors 121, and supplies the second-part oxidant to the combustion chamber 113 by means of several second injectors 122, which also ensures that the total amount of the combustible gas supplied to the combustion chamber 113 reaches stoichiometric balance with the total amount of the first-part oxidant and the second-part oxidant supplied to the combustion chamber 113, so that a partial premixed flame with a small length and high efficiency can be produced. When the burner 100 is arranged on a furnace or another device, the premixed flame can enter the melt through the opening 1131 of the combustion chamber 113, and heat the melt.

Secondly, in the burner 100 provided in this embodiment, the volume percentage of the combustible gas in the combustible gas and first-part oxidant mixture is set to be greater than the upper combustion limit of the combustible gas, which can prevent spontaneous ignition of the combustible gas and first-part oxidant mixture, thereby greatly improving the combustion safety.

Thirdly, referring to FIG. 2, in the burner 100 provided in this embodiment, several injection members 120 are arranged on two opposite side walls 112, so that gas flows ejected from the several injection members 120 form several recirculation zones 123, i.e., vortices, in the combustion chamber 113, in particular below the level (outlet) of the injection members 120. These recirculation zones have two main roles: they allow to stabilize the flame and they allow self-adjustment of the depth of the combustion chamber.

A stable flame refers to a flame capable of burning under various disturbing factors. Such factors can be: pressure pulsations of the external environment, ingress of water or melt, plugging of the outlet of the burner, a sharp change in the feed rate of the components of the combustible mixture, too lean or too rich a flame. In industrial burners, the main cause of flame blowout is the discrepancy between the feed rate of the components of the combustible mixture and the speed of flame propagation in it. By taking advantage of the characteristic that the gas velocity at the center 124 of the vortex is practically zero, ideal conditions can be created to maintain a very stable combustion zone. Several zones with stable flame combustion are formed in these vortex center zones in the combustion chamber 113, and these zones with stable flame combustion are used to continuously ignite a new mixture part formed by the fresh combustible gas and first-part oxidant mixture and the second-part oxidant that are supplied to the combustion chamber 113, which greatly improves the combustion stability.

The stable operation of the burner and the completeness of combustion of the combustible mixture also depend on the size of the combustion chamber. The combustion process does not take place instantly, but may take some time. The combustion time of a certain volume of the combustible mixture depends on many factors (richness of the mixture, turbulence, etc.) The more the volume of the combustible mixture needs to be burned per unit of time, the larger the volume of the combustion chamber is required. If the combustion chamber is too small, then some of the combustible mixture will burn outside the burner. That is, not all gas energy will be used profitably: losses will occur due to incomplete combustion. If the combustion chamber is made too large, it will, firstly, increase the size of the burner, and secondly, it will increase the heat loss into the cooled walls of the burner. The result is that both too small and too large a combustion chamber result in inefficient burner operation.

The burner 100 advantageously has a "variable geometry" combustion chamber 113. By arranging injection members 120 at two opposite side walls of the housing defining the combustion chamber 113, two (series of) vortex flows are created in the combustion chamber 113, forming two recirculation zones 123, located advantageously in a volume of the combustion chamber 113 between an outlet of the injection members 120 and the bottom wall 111, and each recirculation zone 123 located advantageously in proximity of a respective side wall of the housing. The vortex flows in the recirculation zones 123 advantageously allow to automatically adjust the volume of the combustion chamber 113 and enhance the mixing of the combustible gas and first-part oxidant mixture with the second-part oxidant. The change in the volume of the combustion chamber 113 occurs by increasing or decreasing its depth. Since the burner 100 operates under a layer of charge or melt, small particles of charge or melt droplets 125 will fall from above through opening 1131 into the combustion chamber 113 and collect at the bottom 111. Some of these particles will be picked up by vortices from the recirculation zones 123 and the vortex flows can re-throw, out of the combustion chamber 113, some of furnace charge particles that entered the combustion chamber 113 through the opening 1131 of the combustion chamber 113. When the power of the burner 100 is higher, a vortex flow force is larger, more furnace charge is thrown out of the combustion chamber 113 (e.g. back into the melting tank 301), and there is a larger space available for combustion in the combustion chamber 113. When the power of the burner 100 is lower, the vortex flow force is smaller, less furnace charge particles are thrown out of the combustion chamber 113, and more furnace charge particles may accumulate in the combustion chamber 113, so that the space of the combustion chamber 113 available for combustion is reduced. In this way, the vortex flows in the recirculation zones cause the volume of the combustion chamber 113 available for combustion to relate with the power of the burner 100, which can prevent a case where some combustible gas is burned outside the combustion chamber 113 because the space inside the combustion chamber 113 is excessively small, making it impossible to effectively utilize the combustible gas, and can also prevent a case where the space in the combustion chamber 113 is excessively large, resulting in excessive heat dissipation through the housing 110 and excessive manufacturing costs, and can further improve combustion stability and efficiency of the burner 100 below a horizontal plane of the melt.

Advantageously, an included angle between an axis 1201 of each of the injection members 120 and the bottom wall 111 (or the horizontal) is between -40° and 40°. That is, the included angle between the bottom wall 111 and each of the first injectors 121 and the second injectors 122 is between -40° and 40°. Within this angle range, the gas flow injected into the combustion chamber 113 by each injection member 120 can generate a stable recirculation zone in the combustion chamber 113. When the injection members 120 are mounted on the side walls 112 at different angles with the bottom wall 111, the gas flows injected by the injection members 120 can generate recirculation zones at different positions of the combustion chamber 113, and can generate recirculation zones of different forms to meet different requirements.

Optionally, referring to FIGS. 2, 3 and 5, the included angle between the axis 1201 of each injection member 120 and the bottom wall 111 is 0°. In other words, the longitudinal axis 1201 of an injection member 120 can be parallel to the horizontal. In this way, the gas flows ejected by the injection members 120 arranged on two opposite side walls 112 form a good opposed flowing, thus forming stable recirculation zones, i.e., vortices, which is conducive to stable combustion.

In another embodiment of the present disclosure, the injection members 120 are each detachably arranged on a corresponding side wall 112. That is, the first injectors 121 and the second injectors 122 are detachably arranged on the corresponding side walls 112. In this way, when the burner 100 is used, through replacement with an injection member 120 with a different diameter, the flow of the gas ejected by the injection member 120 can be changed, so that the first-part oxidant and the combustible gas can be controlled to be mixed based on an appropriate flow ratio to form a combustible gas and first-part oxidant mixture, and the combustible gas and first-part oxidant mixture and the second-part oxidant are controlled to be supplied to the combustion chamber 113 at an appropriate flow ratio.

Referring to FIGS. 7 to 10, a fluid ejected by each injection member 120 forms a recirculation zone (each zone shown by an arrow inside the combustion chamber 113 in FIGS. 7 to 10) in the combustion chamber 113, and a vertical transverse cross-section of the combustion chamber 113 is advantageously polygonal for maintaining the recirculation zone.

It should be noted that the vertical transverse cross-section of the combustion chamber 113 (in a plane perpendicular to the longitudinal Y-axis) may be octagonal, pentagonal, etc., which may be set based on a number, positions, etc. of injection members 120.

In the burner 100 provided in this embodiment, the combustion chamber 113 can cause the fluid ejected by each injection member 120 to form a stable recirculation zone, which is conducive to maintaining combustion.

Alternatively, the vertical transverse cross-section of the combustion chamber 113 can be rectangular, trapezoidal or hexagonal.

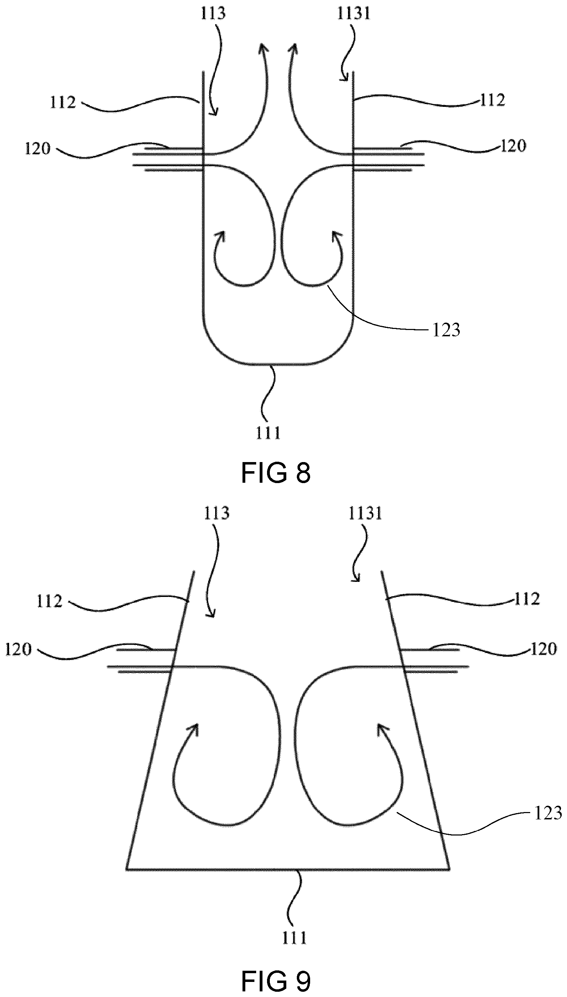

Referring to FIG. 8, when set as a rectangle, the vertical transverses cross-section of the combustion chamber 113 may be either a right-angle rectangle or a rectangle with rounded corners at the bottom. When the cross-section is a rectangle with rounded corners at the bottom, there is a smooth transition between the side wall 112 and the bottom wall 111 of the housing 110.

In the burner 100 provided in the above embodiments, the bottom wall has a substantially rectangular shape with a longer axis parallel to the two side walls, and wherein the cross-section of the combustion chamber 113 can affect the shape of the vortex flow, the cross-section is rectangular, trapezoidal or hexagonal, and the gas flow injected by each injection member 120 can form a stable recirculation zone in the combustion chamber 113, so that combustion can be performed stably.

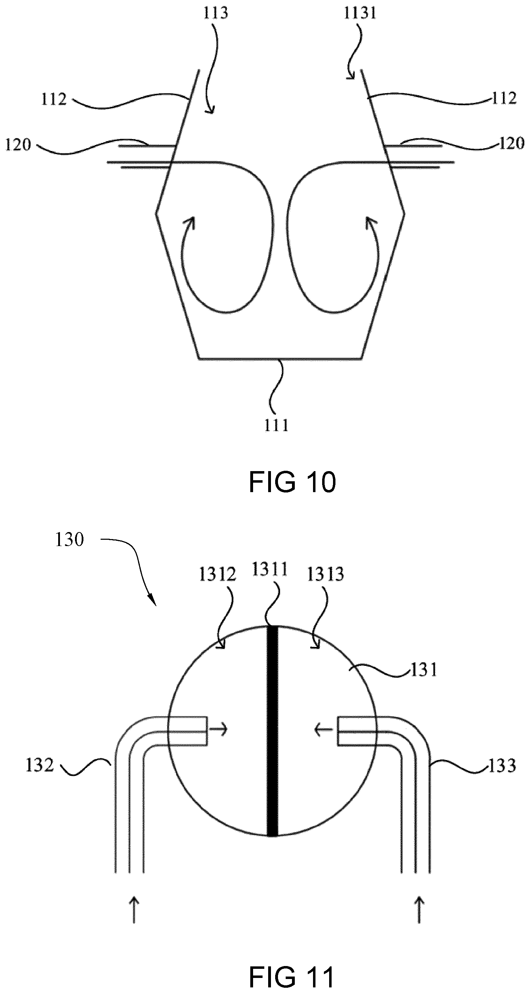

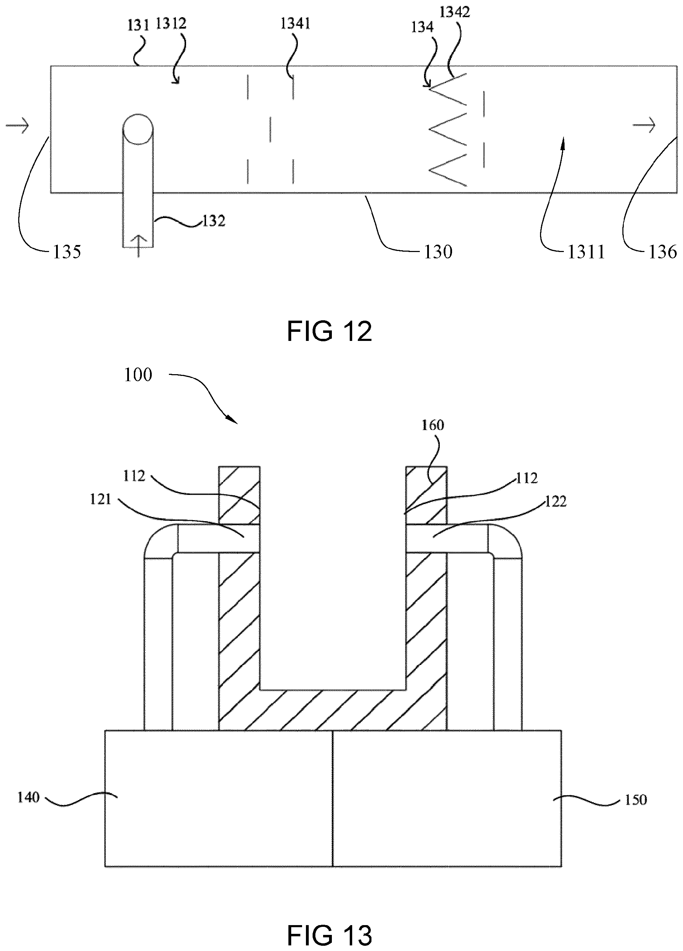

Referring to FIGS. 11 and 12, the burner 100 advantageously further comprises a mixer 130, wherein the mixer 130 comprises a mixing pipe 131 and a first gas supply pipe 132. An inlet 135 of the mixing pipe 131 is used to receive a first oxidant flow, and a longitudinal partition 1311 is provided in the mixing pipe 131; the longitudinal partition 1311 divides an inner cavity of the mixing pipe 131 into a first flow channel 1312 and a second flow channel 1313, an inlet of the first flow channel 1312 and an inlet of the second flow channel 1313 are both maintained in communication with the inlet 135 of the mixing pipe 131, while the longitudinal partition 1311 is advantageously impermeable to gas. An outlet 136 of the first flow channel 1312 is in communication with the first injectors 121, and an outlet of the second flow channel 1313 is in communication with the second injectors 122. Hence, the first flow channel 1312 and the second flow channel 1313 are advantageously fluidly separated downstream of the inlet 135. The first gas supply pipe 132 is in communication with the first flow channel 1312 and is used to convey a combustible gas flow to the first flow channel 1312. As a result, the combustible gas is conveyed to the first injectors 121 only and advantageously not to the second injectors 122, the latter being advantageously only supplied with a flow comprising or consisting of an oxidant and advantageously free of combustible gas.

It should be noted that the mixing pipe 131 may be made of ordinary steel or heat-resistant steel. The cross-section of the mixing pipe 131 may be square, hexagonal or any other closed shape, which may be set as required, and is not limited herein.

The first oxidant flow entering the mixing pipe 131 through the inlet 135 of the mixing pipe 131 may be an oxidant such as oxygen, air or oxygen-enriched air, and the combustible gas flow flowing into the first flow channel 1312 through the first gas supply pipe 132 may be a combustible gas such as natural gas and methane, which may be set as required, and is not limited herein.

In the burner 100 provided in this embodiment, part of the oxidant entering the inlet 135 of the mixing pipe 131 forms the first oxidant flow and enters the first flow channel 1312, and the other part of the oxidant enters the second flow channel 1313. The oxidant entering the first flow channel 1312 and the combustible gas entering the first flow channel 1312 through gas supply pipe 132 are mixed in the first flow channel 1312 to form a combustible gas and first-part oxidant mixture, which is delivered to each first injector 121 through the outlet 136 of the first flow channel 1312. The oxidant entering the second flow channel 1313 is delivered to each second injector 122 through the second flow channel 1313, so that raw materials required for combustion in the combustion chamber 113 are supplied. In addition, through the selection of the first injector 121 and the second injector 122 with appropriate diameters, the ratio of the flow of the oxidant flowing into the first flow channel 1312 to the flow of the oxidant flowing into the second flow channel 1313 may be controlled, and then the solubility of the combustible gas in the combustible gas and first-part oxidant mixer 130 can be controlled, to prevent spontaneous ignition of the combustible gas and first-part oxidant mixture before entering the combustion chamber 113. As a result, the first injectors 121 and the second injectors 122 can have different diameters and/or cross sectional sizes.

The oxidant can be supplied to inlet 135 at an elevated pressure, e.g. between 0.5 and 2 bar, by means of a compressor (not shown). The supply pressure and/or the flow rate of the oxidant can be varied by regulating compressor power. The combustible gas can be supplied to the first gas supply pipe 132 from a grid at a suitable pressure, e.g. between 3 and 5 bar, which is advantageously higher than the supply pressure of the oxidant at inlet 135.

In another embodiment of the present disclosure, referring to FIG. 11, the mixer 130 further includes a second gas supply pipe 133; and the second gas supply pipe 133 is in communication with the second flow channel 1313 and is used to convey a second oxidant flow to the second flow channel 1313.

It should be noted that the second oxidant flow may be oxygen, air, oxygen-enriched air or another oxygen containing substance, which may be set as required, and is not limited herein. For example, when the oxidant supplied by the first oxidant flow and the second oxidant flow is oxygen, the burner 100 is a pure oxygen burner 100.

In the burner 100 provided in this embodiment, pure oxygen or another oxidant different from the first oxidant flow may be supplied to the second flow channel 1313 through the second gas supply pipe 133, thereby changing components of the second-part oxidant, and enhancing performance of the burner 100.

In another embodiment of the present disclosure, referring to FIG. 12, the mixer 130 further comprises a spoiler assembly 134. The spoiler assembly 134 is provided in the first flow channel 1312 and/or the second flow channel 1313.

It should be noted that the spoiler assembly 134 may have a plurality of structures, for example, the spoiler assembly 134 may be a vertical plate 1341, an angle plate 1342 or a combination thereof, which may be set as required, and is not limited herein.

In the burner 100 provided in this embodiment, when the spoiler assembly 134 is arranged in the first flow channel 1312, the mixing quality of the first oxidant flow and the combustible gas flow can be improved; and when the spoiler assembly 134 is arranged in the second flow channel 1313, the mixing quality of the first oxidant flow and the second oxidant flow that enter the second flow channel 1313 can be improved.

Referring to FIG. 13, the burner 100 advantageously further comprises a first distribution chamber 140 and a second distribution chamber 150, the first flow channel 1312 is in communication with the first injectors 121 via the first distribution chamber 140, and the second flow channel 1313 is in communication with the second injectors 122 via the second distribution chamber 150.

In the burner 100 provided in this embodiment, the first distribution chamber 140 is arranged downstream of the first flow channel 1312, can further mix the combustible gas and first-part oxidant mixture, and enables the first injectors 121 located downstream of the first distribution chamber 140 to supply the combustible gas and first-part oxidant mixture to the combustion chamber 113 at the same pressure; and the second distribution chamber 150 is arranged downstream of the second flow channel 1313, can further mix the second-part oxidant when the second-part oxidant has multiple components, and enables the second injectors 122 located downstream of the second distribution chamber 150 to inject the second-part oxidant into the combustion chamber 113 at the same pressure.

The burner 100 advantageously further comprises a preheater (not shown in the figure). The preheater is configured to preheat the first-part oxidant and/or the second-part oxidant. In this way, the combustion quality in the burner 100 can be improved. When the burner 100 is used in a furnace, a fluidized bed or another device, the preheating of the first oxidant and/or the second oxidant by a preheater can further improve energy parameters of a device such as a furnace. The preheater is advantageously arranged upstream of the inlet 135 of the mixer 130.

When a combustion accelerator, that is, the first-part oxidant and the second-part oxidant in this embodiment, is preheated in the preheater, a higher temperature of the combustion accelerator indicates that less combustible gas is needed to melt a unit volume of furnace charge, and energy efficiency parameters of the furnace are improved, and better combustion quality in the burner 100 is obtained. However, after the first-part oxidant is heated, the upper combustion limit of the combustible gas is affected when the first-part oxidant is mixed with the combustible gas. In this case, it is required to correspondingly adjust the volume percentage of the combustible gas and first-part oxidant mixture, to ensure that the volume percentage of the combustible gas in the combustible gas and first-part oxidant mixture is always greater than the upper combustion limit of the combustible gas, so as to prevent spontaneous ignition or ignition of combustible gas-first part oxidant mixture before entering the combustion chamber 113.

Specifically, the following specific implementation is used to explain the influence of preheating the first-part oxidant. At the temperature of 20°C, when air is used as the first-part oxidant, natural gas is used as the combustible gas, and air is also used as the second-part oxidant, the natural gas can only be burned in a concentration range of 5% to 15% when mixed with the air. If the natural gas in the mixture of the natural gas and the air has a concentration less than 5%, it is considered that the natural gas in the mixture has a too low concentration and cannot burn by itself. If the natural gas in the mixture of the natural gas and the air has a concentration greater than 15%, it is considered that the natural gas in the mixture has a too high concentration and also cannot burn by itself. When the natural gas in the mixture has a concentration of 10%, the mixture of the natural gas and the air is regarded as a stoichiometric mixture, which can achieve a maximum thermal effect and reach a highest combustion temperature. In this case, if air with a temperature less than 20°C and natural gas with a concentration greater than 15% are supplied into the mixer 130, the problem of spontaneous ignition of the mixture does not occur.

However, with the increase of the mixture temperature, the upper combustion limit of the combustible gas will also increase. When the air is heated to 500°C, and the temperature of the natural gas correspondingly rises to 500°C, the upper combustion limit of the natural gas will rise to 17% to 18%. In this case, to prevent spontaneous ignition, it is necessary to adjust the concentration of the natural gas and supply natural gas with a concentration greater than 18% into the mixer 130.

When the mixer 130 is used to supply the combustible gas, the first-part oxidant and the second-part oxidant to the combustion chamber 113, the first injectors 121 and the second injectors 122 with approximately the same diameters can be used when the air is at a temperature of 20°C. As a result, the pressure losses through both type of injectors will be the same. When the air is at a temperature of 500°C, the first injectors 121 having diameters smaller than those of the second injectors 122 are used. The purpose is to reduce, when the natural gas is at a relatively high temperature, i.e., when the upper combustion limit of the natural gas is relatively large, the diameters of the first injectors 121 to cause more air to flow into the second flow channel 1313 and less air to flow into the first flow channel 1312, so that the concentration of the natural gas rises to 18% or above, ensuring that no spontaneous ignition occurs.

Referring to FIG. 13, the combustion apparatus 100 advantageously further includes a cooling system 160, arranged on an outer side of the housing 110, and is configured to cool parts of the housing 110 and the injection members 120 located outside the housing 110.

It should be noted that the cooling system 160 is arranged on the outer side of the housing 110, that is, on the outer side of each side wall 112 and bottom wall 111, and the housing 110 is generally made of a metal such as boiler steel or a special high-temperature alloy. A flame in the combustion chamber 113 will generate high temperature, which is much greater than a melting point of the metal of the housing 110. Therefore, the housing 110 can be cooled by water or cold air. All injection members 120 are also cooled by water or air. The burner 100 provided in this embodiment can prolong service lives of the housing 110 and the injection members 120.

In another embodiment of the present invention, referring to FIGS. 1 and 2, an inner side of the housing 110 is provided with a thermal insulation coating. That is, inner sides of the side walls 112 and the bottom wall 111 are provided with the thermal insulation coating, so that the thermal insulation coating can reduce the heat loss through a cooling wall of the combustion chamber 113 and improve efficiency of the burner 100.

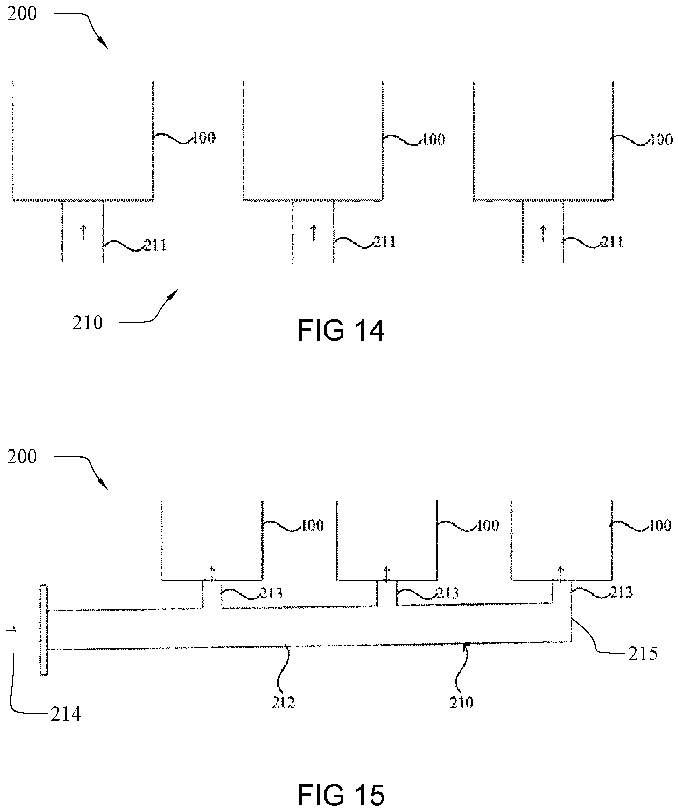

Referring to FIGS. 14 and 15, a combustion system 200 is provided, comprising a distribution pipe system 210 and several foregoing burner 100.

It should be noted that there may be one, two, three or a different number of burner 100, which may be set based on power required by the combustion system 200.

In an implementation of the distribution pipe system 210 as shown in FIG. 14, the distribution pipe system 210 includes several first distribution pipes 211, the several first distribution pipes 211 are respectively used to supply the combustible gas and first-part oxidant mixture to several burners 100. The combustible gas and first-part oxidant mixture is supplied to the corresponding burners 100 at the same pressure by the first distribution pipes 211, which can ensure that the combustible gas and first-part oxidant mixture entering the burner 100 has the same pressure, and the combustion system 200 has good stability.

In another implementation of the distribution pipe system 210 as shown in FIG. 15, the distribution pipe system 210 includes a second distribution pipe 212 and several third distribution pipes 213, the second distribution pipe is a reducing pipe 212 having a cross section area that reduces from inlet 214 towards the end 215 of the pipe 212. The several third distribution pipes 213 are sequentially in communication with the second distribution pipe 212 in a gas flow direction of the second distribution pipe 212, and the several third distribution pipes 213 are respectively used to supply the combustible gas and first-part oxidant mixture to the several burners 100. By setting the pipe diameters of two ends of the reducing pipe to an appropriate value, it can be ensured that the combustible gas and first-part oxidant mixture entering the burner 100 has the same pressure, and the combustion system 200 has good stability.

The burner according to the present invention can be used as a burner in melting, drying, heating and/or preheating applications. The burner as disclosed herein is advantageously used as a submerged type burner.

In another embodiment of the present invention, this embodiment further provides a combustion method applied to the foregoing burner 100, the combustion method including:
mixing a combustible gas with a first-part oxidant with each other before entering a combustion chamber 113 while preventing spontaneous ignition so as to form a combustible gas and first-part oxidant mixture, with the volume percentage of the combustible gas in the combustible gas and first-part oxidant mixture being greater than an upper combustion limit of the combustible gas;
supplying the combustible gas and first-part oxidant mixture to the combustion chamber 113 by means of several first injectors 121; and
supplying a second-part oxidant to the combustion chamber 113 by means of several second injectors 122, wherein the total amount of the first-part oxidant and the second-part oxidant that are supplied to the combustion chamber 113 reaches stoichiometric balance with the amount of the combustible gas supplied to the combustion chamber 113.

Compared with that of an existing combustion method, in the combustion method provided in this embodiment, the combustible gas and the oxidant (including the first-part oxidant and the second-part oxidant) are supplied to the combustion chamber 113 in a mode of partial premixing, the concentration of the combustible gas is controlled, such that the combustion flame features a short length, high efficiency and high safety, and a method of opposed gas flow by the injection members 120 is used to generate recirculation zones that can provide good conditions for stable combustion, which improves flame stability.

The above described are merely preferred embodiments of the present invention, and are not intended to limit the present invention. Any modification, equivalent substitution, improvement, etc. without departing from the principle of the present invention should fall within the scope of protection of the present invention as defined by the appended claims.

## Claims

1. A burner for a smelting furnace (100), comprising:
a housing (110) comprising a bottom wall (111) and a plurality of side walls (112), which enclose a combustion chamber (113) having an opening (1131) at the top; and
injection members (120) arranged on two side walls (112) opposite to each other among the plurality of side walls, wherein the injection members comprise at least one first injector (121) and at least one second injector (122), the at least one second injector being configured to supply a second-part oxidant to the combustion chamber, **characterized in that** the at least one first injector (121) is configured to supply, to the combustion chamber (113), a mixture comprising a combustible gas and a first-part oxidant, with the volume percentage of the combustible gas in the mixture being greater than an upper combustion limit of the combustible gas, and **in that** the total amount of the first-part oxidant and the second-part oxidant that are supplied to the combustion chamber reaches stoichiometric balance with the amount of the combustible gas supplied to the combustion chamber.

2. The burner according to claim 1, wherein an angle between an axis of each of the injection members (120) and the bottom wall (111) is between -40° and 40°.

3. The burner according to claim 1 or 2, wherein the injection members are detachably arranged on the corresponding side walls.

4. The burner according to any one of the preceding claims, wherein a fluid injected by the injection members (120) are configured to form recirculation zones (123) in the combustion chamber, with a vertical transverse cross-section of the combustion chamber being polygonal for maintaining the recirculation zones.

5. The burner according to any one of the preceding claims, wherein the cross-section of the combustion chamber is rectangular, trapezoidal or hexagonal.

6. The burner according to any one of the preceding claims, further comprising a mixer (130) comprising a mixing pipe (131) and a first gas supply pipe (132), wherein an inlet (135) of the mixing pipe is configured to receive a first oxidant flow; the mixing pipe (131) is internally provided with a longitudinal partition (1311) that divides an inner cavity of the mixing pipe into a first flow channel (1312) and a second flow channel (1313), with an inlet of the first flow channel and an inlet of the second flow channel being both maintained in communication with the inlet (135) of the mixing pipe, an outlet of the first flow channel (1312) being in communication with the first injectors (121), and an outlet of the second flow channel (1313) being in communication with the second injectors (122); and the first gas supply pipe (132) is in communication with the first flow channel and is configured to convey a combustible gas flow to the first flow channel.

7. The burner according to claim 6, wherein the mixer (130) further comprises a second gas supply pipe (133); and the second gas supply pipe is in communication with the second flow channel and is configured to convey a second oxidant flow to the second flow channel.

8. The burner according to claim 6 or 7, wherein the mixer (130) further comprises a spoiler assembly provided in the first flow channel and/or the second flow channel.

9. The burner according to any one of the claims 6 to 8, further comprising a first distribution chamber (140) and a second distribution chamber (150), wherein the first flow channel (1312) is in communication with the first injectors (121) via the first distribution chamber, and the second flow channel (1313) is in communication with the second injectors (122) via the second distribution chamber.

10. The burner according to any one of the preceding claims, wherein the burner further comprises a heater configured to preheat the first-part oxidant and/or the second-part oxidant.

11. The burner according to any one of the preceding claims, wherein the housing is made of metal, wherein the burner further comprises a cooling device (160) arranged on an outer side of the housing (110) and configured to cool the housing and the part of each of the injection members located outside the housing.

12. The burner according to any one of the preceding claims, wherein an inner side of the housing (110) is provided with a thermal insulation coating.

13. The burner according to any one of the preceding claims, wherein the first injectors (121) and the second injectors (122) have differing diameter.

14. Use of the burner according to any one of the preceding claim as a submerged type burner.

15. A combustion system (200), wherein the combustion system comprises a distribution pipe system (210) and multiple burners according to any one of claims 1-13,
wherein the distribution pipe system comprises several first distribution pipes respectively configured to supply the mixture to the multiple burners; or
wherein the distribution pipe system comprises a second distribution pipe and several third distribution pipes, the second distribution pipe having a reducing cross section in a gas flow direction, the several third distribution pipes being sequentially in communication with the second distribution pipe in the gas flow direction of the second distribution pipe, and the several third distribution pipes being respectively configured to supply the mixture to the several burners.

16. A furnace (300), comprising a burner system, the burner system comprising the burner according to any one of the claims 1 to 13, or the combustion system according to claim 15.

17. The furnace according to claim 16, wherein the burner (100) is configured to be a submerged type burner.

18. A combustion method applied to the burner according to any one of claims 1-13, wherein the combustion method comprises:
mixing a combustible gas and a first-part oxidant with each other before entering a combustion chamber while preventing spontaneous ignition so as to obtain a mixture of the combustible gas and the first-part oxidant, with the volume percentage of the combustible gas in the mixture being greater than an upper combustion limit of the combustible gas;
supplying the mixture to the combustion chamber by means of at least one first injector; and
supplying a second-part oxidant to the combustion chamber by means of at least one second injector, wherein the total amount of the first-part oxidant and the second-part oxidant that are supplied to the combustion chamber reaches stoichiometric balance with the amount of the combustible gas supplied to the combustion chamber.

19. The combustion method according to claim 18, further comprising loading a furnace charge above the opening (1131) of the burner.

20. The combustion method according to claim 19, wherein the mixture and the second-part oxidant injected from the injection members into the combustion chamber (113) of the burner form recirculation zones (123) in the combustion chamber, wherein a furnace charge accumulates in the combustion chamber, and wherein vortex flows of the recirculation zones throw a portion of the furnace charge out of the combustion chamber through the opening (1131), wherein the portion is adjusted by regulating a power of the burner thereby adjusting a volume of the combustion chamber available for combustion.

## Patentansprüche

1. Ein Brenner für einen Schmelzofen (100), umfassend:
ein Gehäuse (110), umfassend eine Bodenwand (111) und eine Vielzahl von Seitenwänden (112), die eine Verbrennungskammer (113) mit einer Öffnung (1131) an der Oberseite einschließen; und
Einspritzelemente (120), die an zwei einander gegenüberliegenden Seitenwänden (112) aus der Vielzahl von Seitenwänden angeordnet sind, wobei die Einspritzelemente mindestens einen ersten Injektor (121) und mindestens einen zweiten Injektor (122) umfassen, wobei der mindestens eine zweite Injektor konfiguriert ist, um der Verbrennungskammer ein Oxidationsmittel zweiten Teils zuzuführen,
**dadurch gekennzeichnet, dass** der mindestens eine Injektor (121) konfiguriert ist, um der Verbrennungskammer (113) ein Brenngas und ein Oxidationsmittel ersten Teils umfassenden Gemisch zuzuführen, wobei der Volumenanteil des Brenngases in dem Gemisch grösser als eine obere Verbrennungsgrenze des Brenngases ist, und dadurch, dass die gesamte Menge des Oxidationsmittels ersten Teils und des Oxidationsmittels zweiten Teils, die der Verbrennungskammer zugeführt werden, ein stöchiometrisches Gleichgewicht mit der Menge des der Verbrennungskammer zugeführten Brenngases erreicht.

2. Der Brenner nach Anspruch 1, wobei ein Winkel zwischen einer Achse jedes der Einspritzelemente (120) und der Bodenwand (111) zwischen -40° und 40° liegt.

3. Der Brenner nach Anspruch 1 oder 2, wobei die Einspritzelemente abnehmbar an den entsprechenden Seitenwänden angeordnet sind.

4. Der Brenner nach irgendeinem der vorhergehenden Ansprüche, wobei ein von den Einspritzelementen (120) eingespritztes Fluid konfiguriert ist, um Rezirkulationsbereiche (123) in der Verbrennungskammer zu bilden, wobei ein vertikaler Transversalschnitt der Verbrennungskammer polygonal ist, um die Rezirkulationsbereiche aufrechtzuerhalten.

5. Der Brenner nach irgendeinem der vorhergehenden Ansprüche, wobei der Querschnitt der Verbrennungskammer rechteckig, trapezförmig oder sechseckig ist.

6. Der Brenner nach irgendeinem der vorhergehenden Ansprüche, weiter umfassend einen Mischer (130), umfassend ein Mischrohr (131) und ein erstes Gaszufuhrrohr (132), wobei ein Einlass (135) des Mischrohrs konfiguriert ist, um einen ersten Oxidationsmittelstrom aufzunehmen; das Mischrohr (131) im Inneren mit einer längs gerichteten Trennwand (1311) ausgestattet ist, die einen inneren Hohlraum des Mischrohrs in einen ersten Strömungskanal (1312) und einen zweiten Strömungskanal (1313) unterteilt, wobei ein Einlass des ersten Strömungskanals und ein Einlass des zweiten Strömungskanals beide mit dem Einlass (135) des Mischrohrs in Verbindung gehalten werden, ein Auslass des ersten Strömungskanals (1312) in Verbindung mit den ersten Injektoren (121) ist und ein Auslass des zweiten Strömungskanals (1313) in Verbindung mit den zweiten Injektoren (122) ist; und das erste Gaszufuhrrohr (132) in Verbindung mit dem ersten Strömungskanal ist und konfiguriert ist, um einen Brenngasstrom in den ersten Strömungskanal zu transportieren.

7. Der Brenner nach Anspruch 6, wobei der Mischer (130) weiter ein zweites Gaszufuhrrohr (133) umfasst; und das zweite Gaszufuhrrohr in Verbindung mit dem zweiten Strömungskanal ist und konfiguriert ist, um eine zweite Oxidationsmittelströmung an den zweiten Strömungskanal zu transportieren.

8. Der Brenner nach Anspruch 6 oder 7, wobei der Mischer (130) weiter eine Spoileranordnung umfasst, die in dem ersten Strömungskanal und/oder dem zweiten Strömungskanal bereitgestellt ist.

9. Der Brenner nach irgendeinem der Ansprüche 6 bis 8, weiter umfassend eine erste Verteilerkammer (140) und eine zweite Verteilerkammer (150), wobei der erste Strömungskanal (1312) über die erste Verteilerkammer mit den ersten Injektoren (121) in Verbindung ist und der zweite Strömungskanal (1313) über die zweite Verteilerkammer mit den zweiten Injektoren (122) in Verbindung ist.

10. Der Brenner nach irgendeinem der vorhergehenden Ansprüche, wobei der Brenner weiter eine Heizeinrichtung umfasst, die konfiguriert ist, um das Oxidationsmittel ersten Teils und/oder das Oxidationsmittel zweiten Teils vorzuwärmen.

11. Der Brenner nach irgendeinem der vorhergehenden Ansprüche, wobei das Gehäuse aus Metall hergestellt ist, wobei der Brenner weiter eine Kühlvorrichtung (160) umfasst, die an einer äußeren Seite des Gehäuses (110) angeordnet und konfiguriert ist, um das Gehäuse und den Teil jedes der sich außerhalb des Gehäuses befindenden Einspritzelemente zu kühlen.

12. Der Brenner nach irgendeinem der vorhergehenden Ansprüche, wobei eine innere Seite des Gehäuses (110) mit einer thermischen Isolierungsbeschichtung ausgestattet ist.

13. Der Brenner nach irgendeinem der vorhergehenden Ansprüche, wobei die ersten Injektoren (121) und die zweiten Injektoren (122) einen verschiedenen Durchmesser aufweisen.

14. Verwendung des Brenners nach irgendeinem der vorhergehenden Ansprüche als einen Tauchbrenner.

15. Ein Verbrennungssystem (200), wobei das Verbrennungssystem ein Verteilerrohrsystem (210) und zahlreiche Brenner nach irgendeinem der Ansprüche 1 bis 13 umfasst,
wobei das Verteilerrohrsystem mehrere erste Verteilerrohre umfasst, die jeweils konfiguriert sind, um das Gemisch den zahlreichen Brennern zuzuführen, oder
wobei das Verteilerrohrsystem ein zweites Verteilerrohr und mehrere dritte Verteilerrohre umfasst, wobei das zweite Verteilerrohr in einer Gasströmungsrichtung einen abnehmenden Querschnitt aufweist, wobei die mehreren dritten Verteilerrohre sequenziell mit dem zweiten Verteilerrohr in der Gasströmungsrichtung des zweiten Verteilerrohrs in Verbindung sind und wobei die mehreren dritten Verteilerrohre jeweils konfiguriert sind, um das Gemisch den mehreren Brennern zuzuführen.

16. Ein Ofen (300), umfassend ein Brennersystem, wobei das Brennersystem den Brenner nach irgendeinem der Ansprüche 1 bis 13 oder das Verbrennungssystem nach Anspruch 15 umfasst.

17. Der Ofen nach Anspruch 16, wobei der Brenner (100) konfiguriert ist, um ein Tauchbrenner zu sein.

18. Ein Verbrennungsverfahren, das auf den Brenner nach irgendeinem der Ansprüche 1 - 13 angewendet ist, wobei das Verbrennungsverfahren Folgendes umfasst:
Mischen eines Brenngases und eines Oxidationsmittels ersten Teils miteinander vor dem Eintritt in eine Verbrennungskammer, während eine Selbstentzündung verhindert wird, um ein Gemisch aus dem Brenngas und dem Oxidationsmittel ersten Teils zu erhalten, wobei der Volumenanteil des Brenngases in dem Gemisch größer als eine obere Verbrennungsgrenze des Brenngases ist;
Zuführen des Gemisches zu der Verbrennungskammer mit Hilfe mindestens eines ersten Injektors; und
Zuführen eines Oxidationsmittels zweiten Teils in die Verbrennungskammer mit Hilfe mindestens eines zweiten Injektors, wobei die gesamte Menge des Oxidationsmittels ersten Teils und des Oxidationsmittels zweiten Teils, die der Verbrennungskammer zugeführt werden, ein stöchiometrisches Gleichgewicht mit der Menge des der Verbrennungskammer zugeführten Brenngases erreicht.

19. Das Verbrennungsverfahren nach Anspruch 18, weiter umfassend das Einbringen einer Ofenladung über der Öffnung (1131) des Brenners.

20. Das Verbrennungsverfahren nach Anspruch 19, wobei das Gemisch und das Oxidationsmittel zweiten Teils, die von den Einspritzelementen in die Verbrennungskammer (113) des Brenners eingespritzt werden, Rezirkulationsbereiche (123) in der Verbrennungskammer bilden, wobei sich eine Ofenladung in der Verbrennungskammer ansammelt, und wobei Wirbelströmungen der Rezirkulationsbereiche einen Abschnitt der Ofenladung durch die Öffnung (1131) aus der Verbrennungskammer schleudern, wobei der Abschnitt durch Regeln einer Leistung des Brenners eingestellt wird, wodurch ein für die Verbrennung verfügbares Volumen der Verbrennungskammer eingestellt wird.

## Revendications

1. Brûleur pour un four de fusion (100), comprenant :
un carter (110) comprenant une paroi inférieure (111) et une pluralité de parois latérales (112), qui enferment une chambre de combustion (113) ayant une ouverture (1131) au sommet ; et
des éléments d'injection (120) disposés sur deux parois latérales (112) opposées l'une à l'autre parmi la pluralité de parois latérales, les éléments d'injection comprenant au moins un premier injecteur (121) et au moins un second injecteur (122),
l'au moins un second injecteur est conçu pour alimenter la chambre de combustion en un oxydant de seconde partie, **caractérisé en ce que** l'au moins un premier injecteur (121) est conçu pour alimenter, dans la chambre de combustion (113), un mélange comprenant un gaz combustible et un oxydant de première partie, le pourcentage en volume du gaz combustible dans le mélange étant supérieur à une limite supérieure de combustion du gaz combustible, et **en ce que** la quantité totale de l'oxydant de première partie et de l'oxydant de seconde partie qui sont alimentés dans la chambre de combustion atteint un équilibre stœchiométrique avec la quantité de gaz combustible alimentée dans la chambre de combustion.

2. Brûleur selon la revendication 1, dans lequel un angle entre un axe de chacun des éléments d'injection (120) et la paroi inférieure (111) est compris entre - 40° et 40°.

3. Brûleur selon la revendication 1 ou 2, dans lequel les éléments d'injection sont disposés de manière amovible sur les parois latérales correspondantes.

4. Brûleur selon l'une quelconque des revendications précédentes, dans lequel un fluide injecté par les éléments d'injection (120) est conçu pour former des zones de recirculation (123) dans la chambre de combustion, une coupe transversale verticale de la chambre de combustion étant polygonale pour maintenir les zones de recirculation.

5. Brûleur selon l'une quelconque des revendications précédentes, dans lequel la coupe transversale de la chambre de combustion est rectangulaire, trapézoïdale ou hexagonale.

6. Brûleur selon l'une quelconque des revendications précédentes, comprenant en outre un mélangeur (130) comprenant un tuyau de mélange (131) et un premier tuyau d'alimentation en gaz (132), dans lequel une entrée (135) du tuyau de mélange est conçue pour recevoir un premier flux d'oxydant ; le tuyau de mélange (131) est pourvu intérieurement d'une cloison longitudinale (1311) qui divise une cavité interne du tuyau de mélange en un premier canal d'écoulement (1312) et un second canal d'écoulement (1313), une entrée du premier canal d'écoulement et une entrée du second canal d'écoulement étant toutes deux maintenues en communication avec l'entrée (135) du tuyau de mélange, une sortie du premier canal d'écoulement (1312) étant en communication avec les premiers injecteurs (121), et une sortie du second canal d'écoulement (1313) étant en communication avec les seconds injecteurs (122) ; et le premier tuyau d'alimentation en gaz (132) est en communication avec le premier canal d'écoulement et est conçu pour acheminer un flux de gaz combustible vers le premier canal d'écoulement.

7. Brûleur selon la revendication 6, dans lequel le mélangeur (130) comprend en outre un second tuyau d'alimentation en gaz (133) ; et le second tuyau d'alimentation en gaz est en communication avec le second canal d'écoulement et est conçu pour acheminer un second flux d'oxydant vers le second canal d'écoulement.

8. Brûleur selon la revendication 6 ou 7, dans lequel le mélangeur (130) comprend en outre un ensemble de déflecteurs prévu dans le premier canal d'écoulement et/ou le second canal d'écoulement.

9. Brûleur selon l'une quelconque des revendications 6 à 8, comprenant en outre une première chambre de distribution (140) et une seconde chambre de distribution (150), dans lequel le premier canal d'écoulement (1312) est en communication avec les premiers injecteurs (121) via la première chambre de distribution, et le second canal d'écoulement (1313) est en communication avec les seconds injecteurs (122) via la seconde chambre de distribution.

10. Brûleur selon l'une quelconque des revendications précédentes, dans lequel le brûleur comprend en outre un réchauffeur conçu pour préchauffer l'oxydant de première partie et/ou l'oxydant de seconde partie.

11. Brûleur selon l'une quelconque des revendications précédentes, dans lequel le carter est en métal, le brûleur comprenant en outre un dispositif de refroidissement (160) disposé sur un côté extérieur du carter (110) et conçu pour refroidir le carter et la partie de chacun des éléments d'injection située à l'extérieur du carter.

12. Brûleur selon l'une quelconque des revendications précédentes, dans lequel un côté intérieur du carter (110) est pourvu d'un revêtement d'isolation thermique.

13. Brûleur selon l'une quelconque des revendications précédentes, dans lequel les premiers injecteurs (121) et les seconds injecteurs (122) ont un diamètre différent.

14. Utilisation du brûleur selon l'une quelconque des revendications précédentes en tant que brûleur de type immergé.

15. Système de combustion (200), dans lequel le système de combustion comprend un système de tuyauterie de distribution (210) et plusieurs brûleurs selon l'une quelconque des revendications 1 à 13,
dans lequel le système de tuyauterie de distribution comprend plusieurs premiers tuyaux de distribution respectivement conçus pour alimenter le mélange dans les plusieurs brûleurs ; ou
dans lequel le système de tuyauterie de distribution comprend un second tuyau de distribution et plusieurs troisièmes tuyaux de distribution, le second tuyau de distribution ayant une section transversale réduite dans une direction d'écoulement de gaz, les plusieurs troisièmes tuyaux de distribution étant séquentiellement en communication avec le second tuyau de distribution dans la direction d'écoulement de gaz du second tuyau de distribution, et les plusieurs troisièmes tuyaux de distribution étant respectivement conçus pour alimenter le mélange dans les plusieurs brûleurs.

16. Four (300), comprenant un système de brûleur, le système de brûleur comprenant le brûleur selon l'une quelconque des revendications 1 à 13, ou le système de combustion selon la revendication 15.

17. Four selon la revendication 16, dans lequel le brûleur (100) est conçu pour être un brûleur de type immergé.

18. Procédé de combustion appliqué au brûleur selon l'une quelconque des revendications 1 à 13, dans lequel le procédé de combustion comprend :
le mélange d'un gaz combustible et d'un oxydant de première partie l'un avec l'autre avant d'entrer dans une chambre de combustion tout en empêchant l'auto-allumage de manière à obtenir un mélange du gaz combustible et de l'oxydant de première partie, le pourcentage en volume du gaz combustible dans le mélange étant supérieur à une limite supérieure de combustion du gaz combustible ;
l'introduction du mélange dans la chambre de combustion au moyen d'au moins un premier injecteur ; et
l'introduction d'un oxydant de seconde partie dans la chambre de combustion au moyen d'au moins un second injecteur, dans lequel la quantité totale de l'oxydant de première partie et de l'oxydant de seconde partie qui sont introduits dans la chambre de combustion atteint un équilibre stœchiométrique avec la quantité de gaz combustible introduite dans la chambre de combustion.

19. Procédé de combustion selon la revendication 18, comprenant en outre le chargement d'une charge de four au-dessus de l'ouverture (1131) du brûleur.

20. Procédé de combustion selon la revendication 19, dans lequel le mélange et l'oxydant de seconde partie injectés par les éléments d'injection dans la chambre de combustion (113) du brûleur forment des zones de recirculation (123) dans la chambre de combustion, dans lequel une charge de four s'accumule dans la chambre de combustion, et dans lequel les écoulements tourbillonnants des zones de recirculation éjectent une partie de la charge de four hors de la chambre de combustion à travers l'ouverture (1131), la partie étant ajustée en régulant une puissance du brûleur, ajustant ainsi un volume de la chambre de combustion disponible pour la combustion.
